(19) Europäisches Patentamt
European Patent Office
Office européen des brevets

(11) **EP 2 263 476 B1**

## (12) EUROPÄISCHE PATENTSCHRIFT

(45) Veröffentlichungstag und Bekanntmachung des Hinweises auf die Patenterteilung:
**27.08.2014 Patentblatt 2014/35**

(51) Int Cl.:
*A23L 1/06* *(2006.01)*        *A23L 1/212* *(2006.01)*
*A23L 1/064* *(2006.01)*       *A23L 1/068* *(2006.01)*

(21) Anmeldenummer: **09007952.6**

(22) Anmeldetag: **17.06.2009**

(54) **Fruchtzubereitung**

Fruit preparation

Préparation de fruit

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(43) Veröffentlichungstag der Anmeldung:
**22.12.2010 Patentblatt 2010/51**

(73) Patentinhaber: **WILD Dairy Ingredients GmbH**
**69214 Eppelheim/Heidelberg (DE)**

(72) Erfinder:
• **Wild, Hans-Peter**
**69214 Eppelheim (DE)**
• **Hilgemeyer, Sandra**
**68199 Mannheim (DE)**

• **Chatard, Dominique**
**69121 Heidelberg (DE)**
• **Küssner, Klaus**
**69251 Gaiberg (DE)**

(74) Vertreter: **Grünecker, Kinkeldey,**
**Stockmair & Schwanhäusser**
**Leopoldstrasse 4**
**80802 München (DE)**

(56) Entgegenhaltungen:
EP-A- 1 040 759      EP-A- 1 836 904
WO-A-88/02218        WO-A-2004/112502
US-A- 2 340 145      US-A- 4 971 824

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine Zusammensetzung, umfassend ganze Früchte und/oder Fruchtstücke mindestens einer Fruchtart in fester Form, welche ein Volumen von 8 bis 6000 mm$^3$ besitzen, und mindestens eine Fruchtart in flüssiger Form, welche eine Bostwick-Viskosität von 2 bis 18 cm in 15 sec (20°C) besitzt, wobei die ganzen Früchte und/oder Fruchtstücke ohne Zusatz von Verdickungsmitteln gleichmäßig bzw. homogen in der Fruchtart in flüssiger Form verteilt sind.

Es besteht ein großes Interesse daran, Fruchtzubereitungen anzubieten, in denen ganze Früchte und/oder Fruchtstücke homogen verteilt sind. Eine solche gleichmäßige Verteilung wirkt optisch ansprechend und erlaubt eine einfache Weiterverarbeitung im industriellen Maßstab.

Auf Fruchtstücke in einer umgebenden flüssigen Matrix wirken sowohl Auftriebskräfte als auch Gravitationskräfte. Aufgrund dieser Kräfte können die Fruchtstücke nicht ohne besondere Maßnahmen in Schwebe gehalten werden. Die relevanten Einflussfaktoren sind in der Stokes'schen Gleichung dargestellt:

$$v_p = \frac{2r^2 g (\rho_p - \rho_f)}{9\eta}$$

$v_p$ = Sedimentations- bzw. Auftriebs-Geschwindigkeit des Fruchtstücks
$(\rho_p - \rho_f)$ = Dichtedifferenz Flüssigkeit zu Fruchtstück
$\eta$ = Viskosität der umgebenden Flüssigkeit
r = Radius des Fruchtstücks
g = Erdbeschleunigung (9,81m/s$^2$)

Um Fruchtbestandteile in Form von Stücken oder ganzen Früchten in Schwebe halten zu können, werden üblicherweise die rheologischen Eigenschaften der umgebenden flüssigen Matrix verändert. Eine Möglichkeit besteht darin, die Viskosität der umgebenden flüssigen Matrix durch Zusatz von Verdickungsmitteln zu erhöhen. Dadurch können sich die Früchte und/oder Fruchtstücke nur sehr langsam oder gar nicht bewegen. Eine Auftrennung von Frucht und flüssiger Matrix wird somit unterdrückt. Durch Zusatz von Verdickungsmitteln, wie Hydrokolloiden, können außerdem die rheologischen Eigenschaften der umgebenden Matrix durch die Bildung eines Netzwerkes so verändert werden, dass die Bewegung der Fruchtstücke verhindert wird. Substanzen, die die rheologischen Eigenschaften verändern, sind allerdings deklarationspflichtig. Im Zuge eines gestiegenen Interesses des Verbrauchers an möglichst naturbelassenen Lebensmitteln sind jedoch solche Produkte gefragt, die ohne deklarierungspflichtige Zusätze hergestellt werden.

Für die Herstellung von Fruchterzeugnissen, wie Konfitüre und Marmelade, kann eine Veränderung der rheologischen Eigenschaften der umgebenden Matrix auch dadurch erreicht werden, dass der Zucker- und Säuregehalt der flüssigen Matrix so angehoben wird, dass die in den Früchten bzw. den Fruchtstücken natürlich vorhandenen Verdickungsmittel, wie Pektine, wirken können und die Viskosität der umgebenden Matrix somit erhöht wird. Allerdings ist es mit einem solchen Verfahren nicht möglich, ein Lebensmittelprodukt mit niedrigem Zuckergehalt oder niedrigem Säuregehalt herzustellen. Ein hoher Zuckergehalt bzw. Säuregehalt entspricht jedoch ebenfalls nicht dem Anspruch des Verbrauchers.

Desweiteren kann eine Angleichung der Dichtedifferenz von flüssiger Matrix und Fruchtpartikel erfolgen, um Früchte bzw. Fruchtstücke in einer flüssigen Matrix in Schwebe zu halten. Dies kann durch Infusion von Zuckerlösung in die Fruchtpartikel erfolgen, um den osmotischen Druck in den Fruchtstücken zu erhöhen. Allerdings weisen die so erhaltenen Lebensmittelprodukte einen hohen Zuckergehalt auf.

Im Bereich der trinkbaren Fruchterzeugnisse erfolgt eine alternative Vorgehensweise, indem die Fruchtpartikel, z. B. durch Verwendung von Hochdruckhomogenisatoren, auf eine entsprechende Größe gebracht werden, so dass weder ein Aufschwimmen noch ein Absinken in der flüssigen Matrix erfolgt. Diese Produkte weisen jedoch keine sensorisch wahrnehmbaren Fruchtstücke mehr auf, da unter anderem durch die Homogenisierung die Zellstruktur zerstört wird.

Die Druckschrift DE-A-37 24 214 betrifft ein Verfahren zur Herstellung einer lagerfähigen Fruchtzubereitung mit ganzen Früchten ohne Konservierungsstoffe. Bei diesem Verfahren werden die Früchte mit Zucker oder hochkonzentrierter Zuckerlösung vermengt und die Mischung von Früchten und Saft thermisch haltbar gemacht. Anschließend werden die Früchte von dem Saft abgetrennt, der Saft auf eine Dichte eingestellt, die der Dichte der abgetrennten Früchte entspricht, und der so behandelte Saft mit den abgetrennten Früchten wieder zu einer Mischung vereinigt, in welcher die Früchte gleichmäßig schweben. Die so erhaltene Mischung wird dann thermisch haltbar gemacht. Die Behandlung des Saftes kann durch Zugabe eines Verdickungsmittels erfolgen, wobei zusätzlich dem Saft noch Wasser entzogen werden kann. Vorzugsweise erfolgt eine gleichzeitige Viskositätserhöhung des Saftes. Die erhaltene Mischung bleibt bei entsprechender Einstellung von Dichte und Viskosität auch über einen längeren Zeitraum homogen, d. h. der Schwebezustand der Früchte im Saft bleibt erhalten. Durch die Viskosität der Mischung werden mögliches Aufschwimmen und Absinken verhindert. Die verwendeten Verdickungsmittel sind jedoch deklarationspflichtig und erfüllen daher nicht die Anforderungen des Verbrauchers an naturbelassene Lebensmittel.

Die Druckschrift US 5,849,350 beschreibt trinkbare Zubereitungen mit sehr kleinen Fruchtfragmenten, die durch Homogenisierung der Früchte stabil verteilt sind. Die Fruchtstücke sind jedoch aufgrund ihrer geringen Größe nicht mehr als sensorisch wahrnehmbare Fruchtstücke erkennbar. Zudem ist die Zellstruktur der Fruchtstücke nicht mehr erhalten.

Aufgabe der vorliegenden Erfindung ist es, eine optisch ansprechende und industriell einfach verarbeitbare Fruchtzubereitung zur Verfügung zu stellen, die ganze Früchte und/oder sensorisch wahrnehmbare Fruchtstücke enthält.

Diese Aufgabe wird durch eine Zusammensetzung gelöst, die (a) ganze Früchte und/oder Fruchtstücke mindestens einer Fruchtart in fester Form, welche ein Volumen von 8 bis 6000 mm$^3$ besitzen und (b) mindestens eine Fruchtart in flüssiger Form, welche eine Bostwick-Viskosität von 2 bis 18 cm in 15 sec (20 °C) besitzt, umfasst und dadurch gekennzeichnet ist, dass die Komponente (a) ohne Zusatz von Verdickungsmitteln gleichmäßig in der Komponente (b) verteilt ist.

Die Aufgabe wird auch durch ein Verfahren zur Herstellung der erfindungsgemäßen Zusammensetzung gelöst, das dadurch gekennzeichnet ist, dass die Komponenten miteinander vermischt werden.

Die Aufgabe wird auch durch die Verwendung der erfindungsgemäßen Zusammensetzung zur Herstellung von Lebensmitteln und Halbfertigerzeugnissen von Lebensmitteln gelöst.

Bevorzugte Ausführungsformen sind in den Unteransprüchen 2 bis 12 und 15 beschrieben.

Die erfindungsgemäße Zusammensetzung weist eine homogene Verteilung der Komponente (a) in der Komponente (b) auf ohne Zusatz von Verdickungsmitteln.

Erfindungsgemäß werden unter dem Begriff "Früchte und/oder Fruchtstücke in fester Form" Früchte und/oder Fruchtstücke verstanden, deren Zellstruktur vorhanden ist und die eine definierte Form aufweisen. Diese Früchte und/oder Fruchtstücke können aber auch flüssige Bestandteile beinhalten, sofern diese flüssigen Bestandteile in der ursprünglichen Frucht bereits enthalten sind.

Erfindungsgemäß werden unter dem Begriff "Fruchtart in flüssiger Form" verarbeitete Fruchterzeugnisse verstanden, wobei in Abhängigkeit vom Herstellungsverfahren die Zellstruktur der Früchte nicht mehr erhalten ist. Diese Fruchterzeugnisse, die keine sensorisch wahrnehmbaren Fruchtstücke mehr enthalten, können Fruchtextrakte, Fruchtmus, Fruchtpüree, Fruchtsäfte oder Fruchtsaftkonzentrate sein.

Erfindungsgemäß wird unter dem Begriff "gleichmäßig bzw. homogen verteilt" verstanden, dass die Früchte und/oder Fruchtstücke der Komponente (a) in der Komponente (b) schweben, d. h. weder zu Boden sinken noch an der Oberfläche aufschwimmen. Die Begriffe "gleichmäßig" und "homogen" werden identisch verwendet und sind daher austauschbar.

Die Bestimmung der Bostwick-Viskosität ist eine übliche Viskositätsmessung für flüssigviskose Lebensmittelprodukte, die mit einem Fliess-Viskosimeter durchgeführt wird. Dabei handelt es sich um ein physikalisches Vergleichsverfahren, bei dem der Fließweg als Vergleichsgröße für die Viskosität verwendet wird. Die Bostwick-Viskosität der Komponente (b) der erfindungsgemäßen Zusammensetzung wurde mit einem Fliess-Viskosimeter der Firma Bostwick bestimmt. Dabei werden 100 ml der zu untersuchenden Probe in den Messkanal des Bostwick-Viskosimeters eingefüllt und die zurückgelegte Distanz in Zentimeter innerhalb einer Zeit von 15 Sekunden bei einer Temperatur von 20 °C bestimmt.

Unter dem Begriff "Verdickungsmittel" werden erfindungsgemäß Stoffe verstanden, die Flüssigkeiten, z. B. Wasser, aufnehmen und quellen. Verdickungsmittel beeinflussen die Konsistenz durch Erhöhung der Viskosität und/oder Ausbildung der Gelstruktur und/oder durch Herabsetzung der Oberflächenspannung. Übliche Verdickungsmittel sind beispielsweise Johannisbrotkernmehl, Stärke, Guarkernmehl und Pektin.

Erfindungsgemäß werden unter dem Begriff "Früchte" sowohl Obst als auch Gemüse und Nüsse verstanden.

Die erfindungsgemäße Zusammensetzung umfasst Früchte und/oder Fruchtstücke mit einem Volumen von 8 bis 6000 mm$^3$. In einer bevorzugten Ausführungsform in Verbindung mit einer der oben und unten genannten Ausführungsformen umfasst die erfindungsgemäße Zusammensetzung vorzugsweise Früchte und/oder Fruchtstücke mit einem Volumen von 8 bis 1000 mm$^3$, besonders bevorzugt 27 bis 220 mm$^3$, insbesondere 125 mm$^3$. Ist das Volumen der Fruchtstücke mindestens 8 mm$^3$, bleiben die ganzen Früchte und/oder Fruchtstücke der Komponente (a) gleichmäßig in der Komponente (b) verteilt und sind sensorisch wahrnehmbar.

In einer bevorzugten Ausführungsform in Verbindung mit einer der oben und unten genannten Ausführungsformen umfasst die erfindungsgemäße Zusammensetzung vorzugsweise Früchte und/oder Fruchtstücke in einer Größe von mindestens 2 mm, besonders bevorzugt 3 bis 6 mm, insbesondere 5 mm. Handelt es sich um ein kugelförmiges Fruchtstück, so entspricht die Größenangabe dem Durchmesser; bei einem würfelförmigen Fruchtstück gibt die Größenangabe die Kantenlänge des Würfels an. Ist die Größe der Fruchtstücke mindestens 2 mm, bleiben die Fruchtstücke gleichmäßig in der erfindungsgemäßen Zusammensetzung verteilt und sind sensorisch wahrnehmbar.

Die Fruchtstücke der Komponente (a) bleiben auch bei Lagerung der erfindungsgemäßen Zusammensetzung bei 4 bis 20°C über einen Zeitraum bis zu 14 Wochen in Schwebe und sinken weder ab noch schwimmen sie auf.

In der erfindungsgemäßen Zusammensetzung besitzt die Komponente (b) eine Bostwick-Viskosität von 2 bis 18 cm in 15 sec (20 °C). In einer bevorzugten Ausführungsform in Verbindung mit einer der oben und unten genannten Ausführungsformen weist die Komponente (b) eine Bostwick-Viskosität von 4 bis 8 cm in 15 sec (20°C) auf, insbesondere 6 cm in 15 sec (20°C).

In einer bevorzugten Ausführungsform in Verbindung mit einer der oben und unten genannten Ausführungsformen weist die Komponente (b) eine Dichte von 1,030 bis 1,320 g/ml auf, besonders bevorzugt 1,045 bis 1,200 g/ml, insbesondere 1,150 g/ml.

In einer bevorzugten Ausführungsform in Verbindung mit einer der oben und unten genannten Ausführungsformen beträgt der Brix der Komponente (b) 7,5 bis 65 °Brix, besonders bevorzugt 11,5 bis 44 °Brix, insbesondere 35 °Brix.

In einer bevorzugten Ausführungsform in Verbindung mit mindestens einer der oben und unten genannten Ausführungsformen ist die Komponente (b) ein Fruchtextrakt, Fruchtmus, Fruchtpüree, Fruchtsaft und/oder Konzentrat.

Als "Fruchtextrakt" werden erfindungsgemäß flüssige Extrakte aus Früchten verstanden. Unter dem Begriff "Fruchtmus" werden erfindungsgemäß dickbreiige, streichfähige Zubereitungen verstanden, die durch Einkochen von Fruchtmark hergestellt werden. Des weiteren wird unter "Fruchtpüree" erfindungsgemäß eine dickflüssige Zubereitung aus zerkleinerten Früchten verstanden. Unter dem Begriff "Fruchtsaft" werden erfindungsgemäß Flüssigkeiten verstanden, die durch Extraktion, Passieren oder Pressung einer oder mehrerer Fruchtarten erhalten werden. Erfindungsgemäß beschreibt der Begriff "Konzentrat" Fruchtsäfte oder Pürees, denen Wasser entzogen wurde.

Erfindungsgemäß können die ganzen Früchte und/oder Fruchtstücke der Komponente (a) und die Fruchtart in flüssiger Form der Komponente (b) aus nur einer Fruchtart bestehen oder aus einer Mischung mehrerer Fruchtarten. Bevorzugt werden als Fruchtarten Erdbeeren, Kirschen, Pflaumen, Banane, Himbeere, Pfirsich, Mango, Apfel, Rhabarber, Ananas verwendet. Als geschmacklich besonders ansprechend haben sich Kombinationen aus Himbeere/Banane, Pfirsich/Mango und Kirsche/Pflaume herausgestellt.

In einer bevorzugten Ausführungsform in Verbindung mit einer der oben und unten genannten Ausführungsformen beträgt der Fruchtgehalt der erfindungsgemäßen Zusammensetzung vorzugsweise mindestens 20 Gew.-% bezogen auf die Gesamtzusammensetzung. Besonders bevorzugt beträgt der Fruchtgehalt 50 bis 100 Gew.-%, insbesondere mindestens 80 Gew.-%, bezogen auf die Gesamtzusammensetzung. Der Fruchtgehalt der Zusammensetzung ergibt sich dabei aus dem Fruchtgehalt der Komponente (a) und (b).

In einer weiteren bevorzugten Ausführungsform in Verbindung mit einer der oben und unten genannten Ausführungsformen beträgt der Fruchtgehalt der Komponente (b) der erfindungsgemäßen Zusammensetzung vorzugsweise mindestens 5 Gew.-%, besonders bevorzugt mindestens 40 Gew.-%, bezogen auf die Gesamtzusammensetzung.

In einer bevorzugten Ausführungsform in Verbindung mit einer der oben und unten genannten Ausführungsform beträgt das Gewichtsverhältnis der Komponente (a) zur Komponente (b) 95:5 bis 5:95. Besonders bevorzugt ist ein Verhältnis von 80:20 bis 20:80.

In einer weiteren bevorzugten Ausführungsform in Verbindung mit einer der oben und unten genannten Ausführungsformen enthält die erfindungsgemäße Zusammensetzung bis zu 40 Gew.-% eines Süßungsmittels, bezogen auf die Gesamtzusammensetzung. Besonders bevorzugt beträgt der Gehalt an Süßungsmittel 5 bis 30 Gew.-%, insbesondere 10 bis 15 Gew.-%, bezogen auf die Gesamtzusammensetzung.

In einer weiteren bevorzugten Ausführungsform in Verbindung mit einer der oben und unten genannten Ausführungsformen kann die erfindungsgemäße Zusammensetzung natürliche und/oder künstliche Süßungsmittel enthalten. Übliche natürliche Süßungsmittel sind z. B. Kohlenhydrate, wie Zucker, Invertzuckersirup, Glukosesirup oder Fruktosesirup, Fruchtsüße, Honig und Agavendicksaft, natürliche Süßstoffe, wie Stevia, Rebaudiosid A, Thaumatin oder Neohesperidin, und Zuckeralkohole, wie Sorbit, Maltit, Mannit, Isomalt, Maltitol-Sirup, Xylit oder Laktit. Übliche künstliche Süßstoffe sind z. B. Aspartam, Acesulfam, NatriumCyclamat, Natrium-Saccharin oder Sukralose. Diese Süßungsmittel können einzeln oder in Kombination aus zwei oder mehreren Süßungsmitteln eingesetzt werden. Besonders bevorzugt enthält die erfindungsgemäße Zusammensetzung Fruchtsüße als Süßungsmittel.

Weiterhin kann die erfindungsgemäße Zusammensetzung in einer bevorzugten Ausführungsform in Verbindung mit einer der oben und unten genannten Ausführungsformen als weitere Zusätze Säuerungsmittel, wie Zitronensäure oder Tri-Natrium-Citrat, Geschmacksstoffe, Aromastoffe, Farbstoffe, Fruchtkonzentrate, Frucht- und Pflanzenextrakte, funktionelle Inhaltsstoffe, Konservierungsstoffe, fetthaltige Substanzen, Milchprodukte, Sahne, Joghurt, Molke und Buttermilch, sowie Kombinationen aus zwei oder mehr Zusätzen, enthalten. Bevorzugte Zusätze sind Fruchtkonzentrate, Frucht- und Pflanzenextrakte und funktionelle Inhaltsstoffe, besonders bevorzugt sind funktionelle Inhaltsstoffe natürlichen Ursprungs.

In einer weiteren bevorzugten Ausführungsform in Verbindung mit einer der oben und unten genannten Ausführungsformen wird die Größe der Fruchtstücke der Komponente (a) vorzugsweise so gewählt, dass weder ein Aufschwimmen noch ein Absinken in der umgebenden Komponente (b) während der Lagerung auftritt. Die Komponente (b) wird so gewählt, dass das gesamte Fruchterzeugnis, bestehend aus den Komponenten (a), (b), möglichen Süßungsmitteln und weiteren Zusätzen fließfähig ist. Der Begriff "fließfähig" bedeutet, dass das Fruchterzeugnis im industriellen Maßstab mit herkömmlichen (Verdränger-)Pumpen über Leitungssysteme befördert werden kann. Das Süßungsmittel und die möglichen weiteren Zusätze werden zugesetzt, um die sensorischen Eigenschaften des Endproduktes zu verbessern bzw. ernährungsphysiologisch vorteilhafte Eigenschaften hinzuzufügen.

In einer bevorzugten Ausführungsform in Verbindung mit einer der oben oder unten genannten Ausführungsformen wird die erfindungsgemäße Zusammensetzung einer Hitzebehandlung von 60 °C bis 130 °C unterworfen.

In dem erfindungsgemäßen Verfahren werden die einzelnen Komponenten in dem Fachmann bekannter Weise vermischt. Vorzugsweise werden die Früchte vor dem Vermischen in mundgerechte Fruchtstücke geschnitten. Bevorzugt wird dabei ein Schneider verwendet, insbesondere ein Schneider vom Typ Urschel.

Die erfindungsgemäße Zusammensetzung wird zur Herstellung von Lebensmitteln verwendet. Bevorzugt wird die erfindungsgemäße Zusammensetzung zur Herstellung von löffelbaren und trinkbaren Molkereiprodukten, Süßwaren, Eiscreme und sonstigen Desserts verwendet, besonders bevorzugt löffelbare Molkereiprodukte, insbesondere Fruchtjoghurt.

Die vorliegende Erfindung wird durch die folgenden Beispiele näher erläutert.

**Beispiele**

Es wurde eine erfindungsgemäße Zusammensetzung mit den folgenden Bestandteilen hergestellt:

<u>Beispiel 1</u>

| Rohstoff | Anteil Gewichts% |
|---|---|
| Fruchtsüße 70 °Brix | 7 |
| Erdbeerstücke, Volumen 125 mm$^3$ | 85 |
| Erdbeerpüree 8 °Brix; (Bostwick: 12 cm in 15 sec, 20 °C) | 8 |
| Relative Dichte des gesamten Produkts:1,048 g/ml | |

<u>Beispiel 2</u>

| Rohstoff | Anteil Gewichts-% |
|---|---|
| Fruchtsüße 70 °Brix | 10 |
| Kirschen 20-30 mm, halbiert, Volumen 3000 mm$^3$ | 30 |
| Kirschstücke, Volumen 27 mm$^3$ | 39 |
| Pflaumenstücke, Volumen 27 mm$^3$ | 15 |
| Pflaumenpüreekonzentrat 31 °Brix; (Bostwick: 3 cm in 15 sec, 20 °C) | 6 |
| Relative Dichte des gesamten Produkts: 1,083 g/ml | |

<u>Vergleichsbeispiel</u>

| Rohstoff | Anteil Gewichts-% |
|---|---|
| Süßungsmittel Fruchtsüße 70 °Brix | 7 |
| Ganze Erdbeeren, kalibriert mit Durchmesser 30-40 mm, Volumen 6500 -34000 mm$^3$ | 85 |
| Erdbeerpüree 8 °Brix (Bostwick: 12 cm in 15 sec, 20 °C) | 8 |
| Relative Dichte des gesamten Produkts: 1,048 g/ml | |

Beurteilung der Stabilität der Fruchtzubereitung:

Die Früchte bzw. Fruchtstücke, das Fruchtpüree und das Süßungsmittel werden in einen Behälter gegeben und miteinander verrührt. Die durchgerührte Probe wird in ein verschließbares Gefäß eingefüllt. Anschließend wird die Probe nicht weiter bewegt. Nach 3 Stunden erfolgt eine optische Auswertung, wobei beurteilt wird ob eine Auftrennung der Probe stattgefunden hat. Trennt sich die Probe auf, so ist dies ein Zeichen dafür, dass die Probe nicht stabil ist und auch später bei oder nach Abfüllung in Containern zu Instabilitäten neigt. Folgende Beurteilung wird vorgenommen:

Gleichmäßig über die gesamte Probe verteilte Fruchtstücke - stabil

Fruchtstücke sammeln sich vermehrt oben - instabil

Fruchtstücke sammeln sich vermehrt unten - instabil

Fruchtstücke sammeln sich oben und unten und hinterlassen stückfreie Masse in der Mitte - instabil.

Eine weitere Beurteilung der Probe erfolgt nach einem Tag sowie nach einer Woche.

Die Zusammensetzung nach Beispiel 1 und 2 ist stabil. Die Zusammensetzung gemäß dem Vergleichsbeispiel ist instabil, da nach Stehen für 48 bis 96 Stunden eine Auftrennung erfolgt.

## Patentansprüche

1. Zusammensetzung, umfassend:

   (a) ganze Früchte und/oder Fruchtstücke mindestens einer Fruchtart in fester Form, welche ein Volumen von 8 bis 6000 mm$^3$ besitzen, und
   (b) mindestens eine Fruchtart in nichtfester Form, welche eine
   Bostwick-Viskosität von 2 bis 18 cm in 15 sec (20 °C) besitzt,
   **dadurch gekennzeichnet, dass** die Komponente (a) ohne Zusatz von Verdickungsmitteln gleichmäßig in der Komponente (b) verteilt ist.

2. Zusammensetzung nach Anspruch 1, wobei das Gewichtsverhältnis der Komponente (a) zur Komponente (b) 95:5 bis 5:95 beträgt.

3. Zusammensetzung nach Anspruch 2, wobei das Gewichtsverhältnis der Komponente (a) zur Komponente (b) 80:20 bis 20:80 beträgt

4. Zusammensetzung nach mindestens einem der Ansprüche 1 bis 3, **dadurch gekennzeichnet, dass** der Fruchtgehalt der Komponenten (a) und (b) mindestens 20 Gew.-%, bezogen auf die Gesamtzusammensetzung, beträgt.

5. Zusammensetzung nach Anspruch 4, **dadurch gekennzeichnet, dass** der Fruchtgehalt der Komponenten (a) und (b) mindestens 80 Gew.-%, bezogen auf die Gesamtzusammensetzung, beträgt.

6. Zusammensetzung nach mindestens einem der Ansprüche 1 bis 3, **dadurch gekennzeichnet, dass** der Fruchtgehalt der Komponente (b) mindestens 5 Gew.-%, bezogen auf die Gesamtzusammensetzung, beträgt.

7. Zusammensetzung nach Anspruch 6, **dadurch gekennzeichnet, dass** der Fruchtgehalt der Komponente (b) mindestens 40 Gew.-%, bezogen auf die Gesamtzusammensetzung, beträgt.

8. Zusammensetzung nach mindestens einem der Ansprüche 1 bis 7, **dadurch gekennzeichnet, dass** sie weiterhin mindestens ein Süßungsmittel umfasst.

9. Zusammensetzung nach Anspruch 8, wobei der Gehalt an Süßungsmittel bis zu 40 Gew.-%, bezogen auf die Gesamtzusammensetzung, beträgt.

10. Zusammensetzung nach Anspruch 9, **dadurch gekennzeichnet, dass** der Gehalt an Süßungsmittel 10 bis 15 Gew.-%, bezogen auf die Gesamtzusammensetzung, beträgt.

11. Zusammensetzung nach mindestens einem der Ansprüche 1 bis 10, **dadurch gekennzeichnet, dass** die Komponente (b) ein Fruchtextrakt, Fruchtmus, Fruchtpüree, Fruchtsaft und/oder Konzentrat ist.

12. Zusammensetzung nach mindestens einem der Ansprüche 1 bis 11, **dadurch gekennzeichnet, dass** als weitere Zusätze Säuerungsmittel, Geschmacksstoffe, Aromastoffe, Farbstoffe, Fruchtkonzentrate, Frucht- und Pflanzenextrakte, funktionelle Inhaltsstoffe, Konservierungsstoffe und/oder fetthaltige Substanzen enthalten sind.

13. Verfahren zur Herstellung einer Zusammensetzung nach mindestens einem der Ansprüche 1 bis 12, **dadurch gekennzeichnet, dass** die Komponenten miteinander vermischt werden.

14. Verwendung einer Zusammensetzung nach mindestens einem der Ansprüche 1 bis 12 zur Herstellung von Lebensmitteln und Halbfertigerzeugnissen für Lebensmittel.

15. Verwendung nach Anspruch 14 zur Herstellung von löffelbaren und trinkbaren Molkereiprodukten, Süßwaren, Eiscreme und Desserts.

**Claims**

1. Composition comprising:

   (a) whole fruits and/or fruit pieces of at least one fruit type in solid form having a volume of 8 to 6000 mm$^3$, and
   (b) at least one fruit type in non-solid form having a Bostwick viscosity of 2 to 18 cm in 15 sec (20 °C),
   **characterized in that** the component (a) is uniformly distributed in component (b) without addition of thickening agents.

2. Composition according to claim 1, wherein the weight ratio of component (a) to component (b) is 95:5 to 5:95.

3. Composition according to claim 2, wherein the weight ratio of component (a) to component (b) is 80:20 to 20:80.

4. Composition according to at least one of claims 1 to 3, **characterized in that** the fruit content of components (a) and (b) is at least 20% by weight, based on the total weight of the composition.

5. Composition according to claim 4, **characterized in that** the fruit content of components (a) and (b) is at least 80% by weight, based on the total weight of the composition.

6. Composition according to at least one of claims 1 to 3, **characterized in that** the fruit content of component (b) is at least 5% by weight, based on the total weight of the composition.

7. Composition according to claim 6, **characterized in that** the fruit content of component (b) is at least 40% by weight, based on the total weight of the composition.

8. Composition according to at least one of claims 1 to 7, **characterized in that** the composition further comprises at least one sweetening agent.

9. Composition according to claim 8, wherein the content of the sweetening agent is up to 40% by weight, based on the total weight of the composition.

10. Composition according to claim 9, **characterized in that** the content of the sweetening agent is 10 to 15% by weight, based on the total weight of the composition.

11. Composition according to at least one of claims 1 to 10, **characterized in that** component (b) is a fruit extract, fruit jam, fruit puree, fruit juice and/or concentrate.

12. Composition according to at least one of claims 1 to 11, **characterized in that** as further additives acidifiers, tasting agents, flavoring agents, colorants, fruit concentrates, fruit and plant extracts, functional ingredients, preservatives and/or fat containing substances are contained.

13. Process for the preparation of a composition according to at least one of claims 1 to 12, **characterized in that** the components are mixed together.

14. Use of a composition according to at least one of claims 1 to 12 for the preparation of foodstuffs and semi-finished products for foodstuffs.

**15.** Use according to claim 14 for the preparation of spoonable and drinkable dairy products, confectionery, ice cream and desserts.

**Revendications**

**1.** Composition comprenant :

(a) des fruits entiers et/ou des morceaux de fruits d'au moins un type de fruit sous forme solide, qui possèdent un volume de 8 à 6000 mm$^3$, et
(b) au moins un type de fruit sous une forme non solide, qui possède une viscosité au consistomètre de Bostwick de 2 à 18 cm en 15 sec (20°C), **caractérisée en ce que** le composant (a) est réparti uniformément, sans addition d'épaississants, dans le composant (b).

**2.** Composition selon la revendication 1, dans laquelle le rapport en poids du composant (a) relativement au composant (b) prend une valeur de 95:5 à 5:95.

**3.** Composition selon la revendication 2, dans laquelle le rapport en poids du composant (a) relativement au composant (b) prend une valeur de 80:20 à 20:80.

**4.** Composition selon l'une au moins des revendications 1 à 3, **caractérisée en ce que** la teneur en fruits des composants (a) et (b) vaut au moins 20% en poids relativement à la totalité de la composition.

**5.** Composition selon la revendication 4, **caractérisée en ce que** la teneur en fruits des composants (a) et (b) vaut au moins 80% en poids relativement à la totalité de la composition.

**6.** Composition selon l'une au moins des revendications 1 à 3, **caractérisée en ce que** la teneur en fruits du composant (b) vaut au moins 5% en poids relativement à la totalité de la composition.

**7.** Composition selon la revendication 6, **caractérisée en ce que** la teneur en fruits du composant (b) vaut au moins 40% en poids relativement à la totalité de la composition.

**8.** Composition selon l'une au moins des revendications 1 à 7, **caractérisée en ce qu'**elle contient, en outre, au moins un édulcorant.

**9.** Composition selon la revendication 8, dans laquelle la teneur en édulcorants vaut jusqu'à 40% en poids relativement à la totalité de la composition.

**10.** Composition selon la revendication 9, **caractérisée en ce que** la teneur en édulcorants est de 10 à 15% en poids relativement à la totalité de la composition.

**11.** Composition selon l'une au moins des revendications 1 à 10, **caractérisée en ce que** le composant (b) est un extrait de fruit, une compote de fruits, une purée de fruits, un jus et/ou un concentré de fruits.

**12.** Composition selon l'une au moins des revendications 1 à 11, **caractérisée en ce qu'**elle contient en guise d'autres additifs, des acidifiants, des agents de saveur, des substances aromatiques, des colorants, des concentrés de fruits, des extraits de fruits et de plantes, des ingrédients fonctionnels, des conservateurs et/ou des substances lipidiques.

**13.** Procédé de fabrication d'une composition selon l'une au moins des revendications 1 à 12, **caractérisé en ce que** l'on mélange entre eux les composants.

**14.** Utilisation d'une composition selon l'une au moins des revendications 1 à 12, pour la fabrication de produits alimentaires et de semi-produits pour produits alimentaires.

**15.** Utilisation selon la revendication 14, pour la fabrication de produits laitiers à déguster à la cuillère et à boire, de confiseries, de crèmes glacées et de desserts.

**IN DER BESCHREIBUNG AUFGEFÜHRTE DOKUMENTE**

**In der Beschreibung aufgeführte Patentdokumente**

- DE 3724214 A
- US 5849350 A